# EUROPÄISCHE PATENTSCHRIFT

(11) **EP 3 800 158 B1**
(45) Veröffentlichungstag und Bekanntmachung des Hinweises auf die Patenterteilung: **09.04.2025**
(21) Anmeldenummer: 20199199.9
(22) Anmeldetag: 30.09.2020
(51) Int. Cl.: B66F 9/06, B66F 9/075, B66F 9/24, B66F 17/00

(54) **FLURFÖRDERZEUG, EINGERICHTET FÜR DEN FAHRERLOSEN, AUTONOM AGIERENDEN BETRIEB FÜR EINE ZU TRANSPORTIERENDE LAST**
INDUSTRIAL TRUCK EQUIPPED FOR DRIVERLESS AUTONOMOUS OPERATION FOR A LOAD TO BE TRANSPORTED
CHARIOT DE MANUTENTION, ÉQUIPÉ POUR UN FONCTIONNEMENT AUTONOME SANS CONDUCTEUR POUR UNE CHARGE À TRANSPORTER

(30) Priorität: 02.10.2019 DE 102019215180
(43) Veröffentlichungstag der Anmeldung: 07.04.2021
(73) Patentinhaber: Robert Bosch GmbH, 70442 Stuttgart (DE)
(72) Erfinder: Roethling, Frank, 70469 Stuttgart (DE); Heim, Alessandro, 70376 Stuttgart (DE); Schild, Johannes, 74232 Abstatt (DE)

(56) Entgegenhaltungen:
- EP-A1- 3 241 801
- EP-A1- 3 453 672
- EP-A1- 3 511 289
- EP-B1- 3 241 801
- WO-A2-2015/121818
- DE-A1- 102018 104 648

## Beschreibung

Die vorliegende Erfindung betrifft ein Flurförderzeug (Automated Guided Vehicle, AGV), eingerichtet für den fahrerlosen, autonom agierenden Betrieb für eine zu transportierende Last. Insbesondere findet die Erfindung Anwendung bei einem Roboterfahrzeug für den Transport von Lasten. Umfasst sind auch hebende Flurförderzeuge und nicht stapelnde Hubwagen sowie entsprechende Kombinationen.

Das Flurförderzeug des Standes der Technik, Dokument EP3241801A1, offenbart den Oberbegriff des unabhängigen Anspruchs.

Ein System zur Verhinderung von Kollisionen zwischen Flurförderzeugen und Gegenständen ist aus der WO 2015/121818 A2 bekannt.

Ein Verfahren zur Steuerung eines Flurförderzeugs ist aus der EP 3 511 289 A1 bekannt.

Mit fortschreitender Automatisierungstechnik wird der Handhabung von Lasten zunehmend Bedeutung beigemessen.

Kollisionen mit Personen werden in der Praxis zumeist durch den Einsatz von Laserscannern mit PLrd (Performance Level nach ISO 13849-1:2006) versucht zu verhindern.

Zum Abladen des Transportguts wird in einen sogenannten "Supermarkt" (Abstell- bzw. Lagerbereich) eingefahren, wobei ein Laserscanner zur Annäherung an die Abladeposition abgeschaltet wird, was dazu führt, dass im Supermarkt bereits vorhandenes Transportgut nicht oder mit ungenügender Sicherheit beim Einfahren erkannt werden kann. Daher wird der Supermarkt als Gefahrenbereich ausgewiesen, in dem nur eingewiesenen Personen Zutritt gewährt wird. Diese Personen werden beim Einfahren des AGV in einen Gefahrenbereich üblicherweise durch Blink- und Akustiksignale gewarnt. Zudem kann eine in einem Gefahrenbereich eingeschlossene Person zumeist das AGV über einen Not-Halt-Taster stillsetzen. Einige AGV nehmen in Kauf, dass Transportgüter mit einem gewissen Sicherheitsabstand zueinander abgeladen werden, was zu einem erhöhten Platzbedarf führt. Es ist auch bekannt, dass der Einfahrtsbereich als Gefahrenbereich ausgewiesen und damit als Fußweg gesperrt wird.

Hiervon ausgehend ist es Aufgabe der vorliegenden Erfindung, ein Flurförderzeug, eingerichtet für den fahrerlosen, autonom agierenden Betrieb für eine zu transportierende Last zu schaffen, das die genannten Nachteile lindert oder sogar vermeidet. Insbesondere sollen auf konstruktiv einfache Weise die Erhöhung des Personenschutzes beim Abladen eines Transportguts in einem Gefahrenbereich, Wegfall eines zusätzlichen Not-Halt-Tasters und/oder Verminderung des Platzbedarfs erreicht werden. Ein weiteres Ziel kann darin bestehen, ein sicheres Überfahren von Fußgängerwegen beim Einfahren in einen Gefahrenbereich zu verwirklichen, wobei das Abschalten des Laserscanners bzw. ein zu frühes Umschalten auf das schmale Schutzfeld mit PLd sicher verhindert wird.

Diese Aufgaben werden gelöst mit einem Flurförderzeug gemäß dem unabhängigen Patentanspruch. Weitere Ausgestaltungen der Erfindung sind in den abhängigen Patentansprüchen angegeben. Es ist darauf hinzuweisen, dass die Beschreibung, insbesondere im Zusammenhang mit den Figuren, weiterer Einzelheiten und Weiterbildungen der Erfindung ausführen, die mit den Merkmalen aus den Patentansprüchen kombinierbar sind.

Hierzu trägt ein Flurförderzeug bei, das für den fahrerlosen, autonom agierenden Betrieb für eine zu transportierende Last eingerichtet ist und zumindest folgendes umfasst:
- ein Steuerungssystem, das das Flurförderzeug steuert und lenkt,
- eine Auswerteeinheit, die ein Signal zum Anhalten des Flurförderzeugs erzeugt, wobei eine Detektoreinrichtung zur Erkennung von im Fahrweg befindlichen Personen und/oder Objekten an das Steuerungssystem angeschlossen ist, wobei das Steuerungssystem eingerichtet ist, ein Schutz- und/oder Warnfeld der Detektoreinrichtung zu prüfen und wobei das Schutz- und/oder Warnfeld in Abhängigkeit von der Position des Flurförderzeugs und/oder detektierter Hindernisse im Fahrweg des Flurförderzeugs automatisch umschaltbar ist.

Das hier vorgestellte Flurförderzeug hat den Vorteil, dass nachdem ein Hindernis im Supermarkt über den rückwärtigen Laserscanner (mittels Warnfeld) erkannt wurde, die Aktivierung eines schmaleren Schutzfeldes die Erkennung einer eingeschlossenen Person ermöglicht. Das AGV hält berührungslos an und ein zusätzlicher Not-Halt-Taster wird nicht mehr benötigt. Im Normalfall (keine eingeschlossene Person) "schaut" das schmalere Schutzfeld unter den Transportgutträger (Dolly), auf das das geladene Transportgut platziert wird, wobei der Platz in der "Supermarktspur" optimal ausgenutzt wird. Durch sicher überwachte Radodometrie wird sichergestellt, dass die Umschaltung auf ein schmales Schutzfeld erst im Gefahrenbereich erfolgt. D. h., das zur sicheren Überquerung des Fußgängerwegs notwendige Laserscannerfeld wird vor Beginn der Rückwärtsfahrt ausgewählt und zwingend für einen vorgegebenen Verfahrweg beibehalten.

Ein fahrerloses Flurförderzeug kann ein kraftgetriebenes Fahrzeug ggf. einschließlich jeglicher Anhänger sein, das dazu bestimmt ist, selbständig zu fahren. Dafür kann das Flurförderzeug mit einem Leitsystem im Boden oder der Umgebung zusammenwirken, welches die Fahrrouten vorgibt.

"Last" bedeutet ein zu handhabendes Objekt, einschließlich dessen Masse, Abmessungen, Zustand und/oder Anordnung. Die Last kann (nur) aus einem Ladegut bestehen. Die Last kann auch das Ladegut und eine Transporteinrichtung für das Ladegut, z. B. einen Transportwagen, eine Palette, einen Bodenroller, etc. umfassen. Unter einer "Lasthandhabung", die von dem Flurförderzeug ausgeführt werden kann, werden insbesondere Heben, Senken, Lastübergabe und/oder Lastbehandlung verstanden.

Das Steuerungssystem hat eine automatische Einrichtung zum Inhalt, die das Flurförderzeug und seine zugehörigen Einrichtungen steuert (z.B. aktiviert/deaktiviert) und (ggf. sensorisch überwacht) lenkt. Das System des fahrerlosen Flurförderzeugs umfasst das Steuerungssystem, das Teil des Flurförderzeugs und/oder davon getrennt sein kann. Das Steuerungssystem kann eine Recheneinheit umfassen, die im oder am Flurförderzeug vorgesehen ist.

Die Auswerteeinheit kann mit einem Sensorsystem (z.B. der Detektoreinrichtung) bevorzugt elektrisch und datenleitend verbunden und eingerichtet, dessen Signale zu verarbeiten. Die Auswerteeinheit ist insbesondere eingerichtet, eine Analyse der Daten des Sensorsystems bzw. der Detektoreinrichtung vorzunehmen, sodass Personen, Gegenstände, Objekte (im Bereich hinter dem Flurförderzeug) eindeutig bezüglich ihrer Lage/Position erfasst bzw. bestimmt werden können. Die in der Auswerteeinheit bestimmte Lage kann mit vorgegebenen (zum Beispiel gespeicherten und/oder eingestellten) Parametern abgeglichen oder beeinflusst werden, wobei dann auch ein Regelungssignal an die Steuerung übermittelt wird und dabei der Betrieb des Flurförderzeugs durch die Auswerteeinheit beeinflusst werden kann. Die Auswerteeinheit kann ein separates (elektronisches) Aggregat sein, es ist aber auch möglich, dass die Auswerteeinheit Teil des Steuerungssystems zur Ansteuerung des Flurförderzeugs selbst ist. Die (mindestens) eine datenleitende Verbindung zwischen Auswerteeinheit und Steuergerät sowie dem Sensorsystem kann kabelgebunden oder kabellos realisiert sein.

Die Detektoreinrichtung ist eingerichtet, ein Signal zu erzeugen, das repräsentativ für einen (rückwärtigen) Umgebungsbereich des Flurförderzeugs ist. Dieses kann von der Auswerteeinheit interpretiert werden und eine Anweisung an das Steuerungssystem veranlassen, durch das das Flurförderzeug mittels eines Bremssystems unter den vorgegebenen Betriebsbedingungen angehalten werden kann, insbesondere bevor ein vorgebbarer Sicherheitsabstand auf ein (erkanntes, vordefiniertes) Objekt unterschritten wird. Die Detektoreinrichtung zur Erkennung von im (rückwärtigen) Fahrweg befindlichen Personen und/oder Objekten, ist an die Auswerteeinheit und/oder Steuerungseinrichtung angeschlossen.

Die Detektoreinrichtung ist insbesondere eingerichtet, Schutz- und/oder Warnfelder zu überwachen, also dort während der (rückwärtigen) Fahr des Flurförderzeugs eintretende Personen, Objekte, etc. zu erfassen. Abhängig von Fahrtrichtung, der Geschwindigkeit und/oder dem Lenkeinschlag können unterschiedlich vordefinierte Bereiche überwacht werden. Jeder vordefinierte Bereich kann aus einem Warnfeld und einem Schutzfeld bestehen, wobei ggf. auch mehrere Warnfelder und/oder Schutzfelder vorgebbar sind. Wenn ein Warnfeld unterbrochen wird, dann kann die Auswerteeinheit das Flurförderzeug veranlassen, die Geschwindigkeit (nur) zu verringern (ohne direkt zu stoppen). Wenn ein Schutzfeld unterbrochen wird, dann löst die Auswerteeinheit (automatisch, also insbesondere ohne aktives Einwirken einer Person und/oder unmittelbar aufgrund einer Anweisung der Auswerteinheit) eine Bremsfunktion aus, wobei beispielsweise der Antrieb von der Spannungsversorgung getrennt wird (sicher abgeschaltetes Drehmoment (STO)). Wenn das Schutzfeld nicht mehr unterbrochen wird, dann kann der Antrieb des Flurförderzeugs wieder aktiviert werden und so die Fahrt nach z. B. 2 Sekunden automatisch fortsetzen.

Die Detektoreinrichtung (ggf. auch die Auswerteeinheit und/oder das Steuerungssystem) sind eingerichtet, aktuell einzusetzende Schutz- und/oder Warnfeld in Abhängigkeit von der (aktuellen) Position des Flurförderzeugs und/oder (aktuell) detektierter Hindernisse im Fahrweg des Flurförderzeugs automatisch umzuschalten.

Gemäß einem ersten Beispiel, erkennt das Steuerungssystem einen besonderen Fahrzyklus (z. B. anhand der Geschwindigkeit, der Fahrrichtung, etc.) oder Fahrtstrecke (z.B. anhand einer Leitstrecke am Boden), wobei in Abhängigkeit dieser Parameter selbstständig ein dazu passend vorgegebenes Schutz- und/oder Warnfeld der Detektoreinrichtung vorgegeben/aktiviert wird. Hierfür können im Steuerungssystem, der Auswerteeinheit und/oder der Detektoreinrichtung Datensätze vorliegen, bei welcher Position des Flurförderzeugs welche Dimensionen bzw. Aufteilungen von Schutz- und/oder Warnfeld vorzunehmen sind. Eine automatische Umschaltung kann beispielsweise bei Einfahrt in einen definierten Supermarkt erfolgen.

Erfindungsgemäß tut das Steuerungssystem (ggf. mit der Auswerteeinheit und/oder der Detektoreinrichtung) ein konkretes Muster im aktuellen Schutz- und/oder Warnfeld erkennen und dann selbstständig ein abweichendes vorgegebenes Schutz-und/oder Warnfeld der Detektoreinrichtung vorgeben/aktivieren. Wird zum Beispiel ein Lastenträger (Dolly) anhand seiner äußeren Räder erkannt, wird das Schutz-und/oder Warnfeld ggf. verjüngt, so dass das Flurförderzeug weiter zurücksetzen kann und sich dann das Schutz- und/oder Warnfeld zwischen den Rädern und unter den Lastenträger erstreckt.

Bevorzugt umfasst das Steuerungssystem eine Steuereinheit für die gewünschte Fahrtrichtung und die Geschwindigkeit, eine Steuereinheit für die Bewegung und eine Steuereinheit für die Sicherheit des Flurförderzeugs. Die erste Steuereinheit (Robot Control Unit, RCU), die zweite Steuereinheit (Motion Control Unit, MCU) und die dritte Steuereinheit (Safety Control Unit, SCU) können Bestandteil des Steuerungssystems sein.

Mit Vorteil umfasst die Detektoreinrichtung einen Laserscanner. Laserscanner tasten einen vorgegebenen Umgebungsbereich mit Laserlicht ab. Dabei wird von dem Scanner ein Laserstrahl ausgesandt, welcher dann von der Umgebung, einem Objekt oder Hindernis wieder reflektiert und von einer Empfangsoptik wieder aufgenommen wird. Dabei kann der Laser über einen Umlenkspiegel, welcher verschwenkt wird, abgelenkt werden. Die Laufzeit des Lasers vom Scanner bis zum erneuten Empfang wird bestimmt und ausgewertet, wobei damit auf einen Abstand hin bis zu einem Hindernis (Person, Objekt, etc.) im Abtastbereich geschlossen werden kann. Auch kann eine Art "Abbild" generiert werden, welche Relativlage mehrere erfasste Objekte zueinander haben. Damit ist auch eine komplexere Analyse der Umgebung möglich.

Vorzugsweise ist der Laserscanner am Heckteil des Flurförderzeugs angeordnet. Die Blickrichtung bzw. damit generierte Schutz- und/oder Warnfelder erstrecken sich daher insbesondere vom Heckteil des Flurförderzeugs über vorgebbare Bereiche, z. B. über die gesamte Flurförderzeug-Breite.

Zweckmäßig umfasst das Steuerungssystem eine Auswerteeinheit. Mit Vorteil ist die Auswerteeinheit in das Steuerungssystem integriert.

Bevorzugt ist der Laserscanner an die dritte Steuereinheit (SCU) angeschlossen.

Mit Vorteil sind die zweite Steuereinheit (MCU) und die dritte Steuereinheit (SCU) eingerichtet, anhand von vorgegebenen Schutz- und Warnfeldern des Laserscanners die Umgebung auf Hindernisse zu prüfen.

Vorzugsweise sind mehrere Schutzfelder (Bereiche vor, hinter und neben dem Flurförderzeug) im Laserscanner vordefiniert.

Zweckmäßig ist die dritte Steuereinheit (SCU) eingerichtet, die Schutzfelder zu aktivieren und/oder zu deaktivieren.

Bevorzugt ist das Steuerungssystem eingerichtet, den Fahrweg des Flurförderzeugs durch Radodometrie zu überwachen.

Mit dem hier vorgestellten Flurförderzeug prüft die Sicherheitssteuerung und die Fahrsteuerung anhand von vorgegebenen Schutz- und Warnfeldern eines Laserscanners die Umgebung auf Hindernisse. Spätestens wenn ein unerwartetes Objekt in einem Schutzfeld erkannt wird, setzt die Sicherheitssteuerung das Fahrzeug still. Mehrere Schutzfelder (Bereiche vor, hinter oder neben dem Fahrzeug) sind im Laserscanner vordefiniert und lassen sich durch die Sicherheitssteuerung aktivieren oder deaktivieren.

Das Flurförderzeug kann demnach auch mit einem System zur Datenverarbeitung ausgeführt sein, umfassend Mittel zur Ausführung der vorstehend genannten Schritte des Verfahrens mit der Detektoreinrichtung. Insbesondere ist das System eingerichtet, mittels der Detektoreinrichtung im Fahrweg befindliche Personen und/oder Objekten festzustellen, insbesondere unter Einsatz der Auswerteeinheit, wobei
- das Schutz- und/oder Warnfeld in Abhängigkeit von der Position des Flurförderzeugs und/oder detektierter Hindernisse im Fahrweg des Flurförderzeugs automatisch umschaltbar ist, und/oder
- bei Feststellen einer (vorgebbar) unzulässigen Veränderung (zumindest im Warnfeld) das (unverzügliche) Stoppen der Fahrt des Flurförderzeugs veranlasst wird.

Vorsorglich sei darauf hingewiesen, dass die Bezeichnung von Elementen mit Zahlwörtern ("erste", "zweite", ...) regelmäßig nur zur Unterscheidung erfolgt und keine Abhängigkeit oder Reihenfolge der Elemente vorgeben muss. Mit Blick auf die Sensoren bedeutet dies beispielsweise, dass deren Anbringung (stationär, mitfahren) und/oder Ort (an einem Träger, Greifer, etc.) unabhängig von der Bezeichnung frei bzw. entsprechend den technischen Gegebenheiten wählbar ist.

Die Erfindung und das technische Umfeld werden nachfolgend anhand von Figuren näher erläutert. Dabei sind gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder der vorstehenden Beschreibung frei kombinierbar, es sei denn, dass sich für einen Fachmann zwingend etwas anderes ergibt, bzw. eine solche Kombination explizit untersagt wird. Es zeigen schematisch:
- Fig. 1:: eine Draufsicht auf ein fahrerloses, autonom agierendes Flurförderzeug mit einem Steuerungssystem und einer Detektoreinrichtung;
- Fig. 2:: ein Blockschaltbild mit dem Steuerungssystem, an das ein Laserscanner und Antriebsmotoren angeschlossen sind;
- Fig. 3:: eine Seitenansicht auf das Flurförderzeug gemäß Fig. 1 mit beladener Last und dem Laserscanner;
- Fig. 4a bis 4e:: eine erste Ausführungsform des Betriebes des hier vorgestellten Flurförderzeugs; und
- Fig. 5a bis 5e:: eine zweite Ausführungsform des Betriebes des hier vorgestellten Flurförderzeugs.

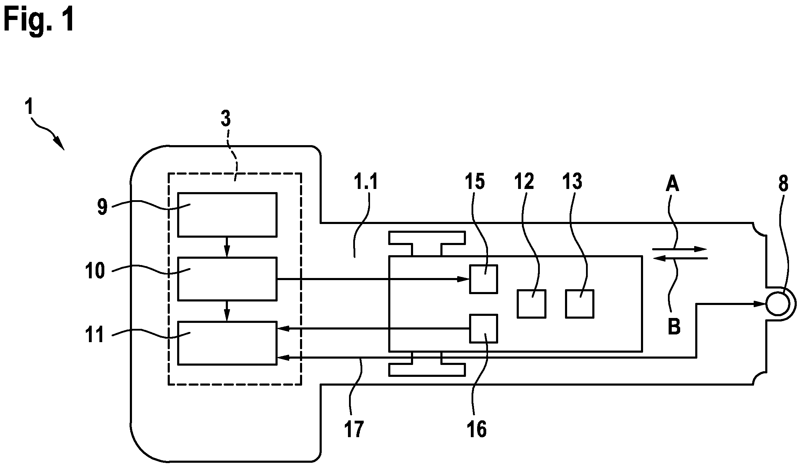

Fig. 1 zeigt eine Draufsicht auf ein fahrerloses, autonom agierendes Flurförderzeug 1 mit einem Steuerungssystem 3 und einem Laserscanner 8.

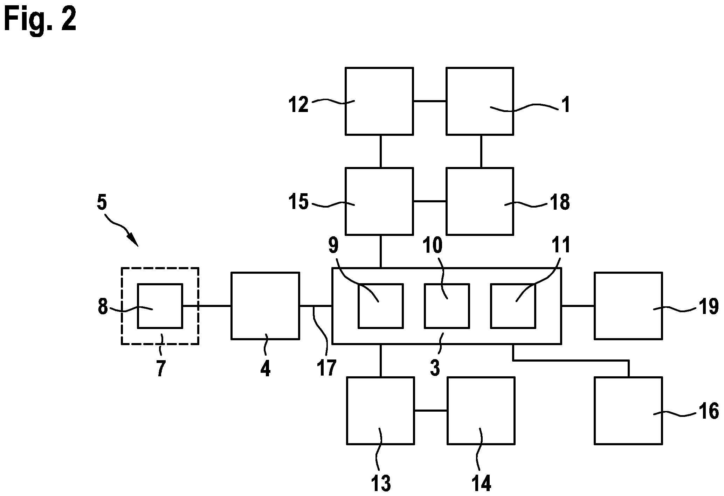

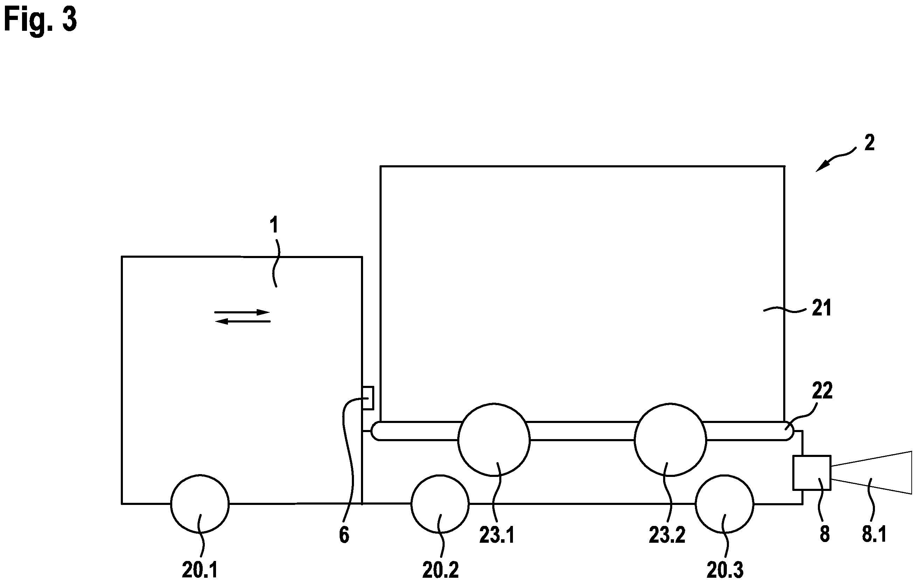

Das hier vorgestellte Flurförderzeug 1, aufweisend einen Ladebereich 1.1 für eine zu transportierende Last 2 (siehe Fig. 3), umfasst zumindest das Steuerungssystem 3, das das Flurförderzeug 1 steuert und lenkt, und eine Auswerteeinheit 4 (siehe Fig. 2), die z.B. auch ein Signal zum Anhalten des Flurförderzeugs 1 erzeugt. Die Detektoreinrichtung 5 (siehe Fig. 2) ist an das Steuerungssystem 3 angeschlossen, wobei die Detektoreinrichtung 5 einen Laserscanner 8 umfasst. Das Steuerungssystem 3 umfasst eine erste Steuereinheit 9 für die gewünschte Fahrtrichtung und die Geschwindigkeit, eine zweite Steuereinheit 10 für die Bewegung und eine dritte Steuereinheit 11 für die Sicherheit des Flurförderzeugs 1. Mit 12 ist ein erster Motor für die Fahrbewegung des Flurförderzeugs 1 und mit 13 ein zweiter Motor für die Höhenverstellung einer Hub- und Absenkeinrichtung 14 (siehe Fig. 2) bezeichnet. Mit 15 ist ein erster Drehgeber (Soll-Drehzahl) und mit 16 ist ein zweiter Drehgeber bezeichnet. Mit A, B sind Bewegungsrichtungen bezeichnet. Das Flurförderzeug 1 kann ein Activ Shuttle (AS) sein.

Fig. 2 veranschaulicht ein Blockschaltbild mit dem Steuerungssystem 3 für das hier vorgestellte Flurförderzeug 1. Der Laserscanner 8 ist über die Auswerteeinheit 4 an das elektronische Steuerungssystem 3 durch eine datenleitende Verbindung 17 angeschlossen. Die zweite Steuereinheit 10 steht über den ersten Drehzahlgeber 15 (Soll-Drehzahl) mit dem Motor 12 in Verbindung. Der zweite Drehzahlgeber 16 steht mit der dritten Steuereinheit 11 in Verbindung. Ein Bremssystem 18 ist an das Steuerungssystem 3 angeschlossen, das ein Signal an den ersten Motor 12 zum Anhalten des Flurförderzeugs 1 erzeugen kann. Das Bremssystem 18 kann auch allein oder in Kombination mit dem ersten Motor 12 auf das Flurförderzeug 1 einwirken. Weiterhin ist der zweite Motor 13 für den Antrieb der Hub- und Absenkeinrichtung 14 an das Steuerungssystem 3 angeschlossen. Die Detektoreinrichtung 5 kann ebenso zur Erkennung der Position der Hub- und Absenkeinheit 14 herangezogen werden. Mit 19 ist ein Speicherelement bezeichnet.

Fig. 3 zeigt eine Seitenansicht auf das Flurförderzeug 1 gemäß Fig. 1 mit einer beladenen Last 2. Die Last 2 besteht hierbei aus einem Ladegut 21 und einem Transportwagen 22, mit dem das Ladegut 21 transportiert werden kann. Mit 20.1, 20.2 und 20.3 sind Räder des Flurförderzeugs 1 bezeichnet. Mit 23.1 und 23.2 sind Räder des Transportwagens 22 bezeichnet. Der Laserscanner 8 ist am Heck des Flurförderzeugs 1 angebracht. Das Lasersichtfeld 8.1 ist in Richtung weg von dem Flurförderzeug 1 ausgerichtet. Mit 6 ist ein Lastsensor (Lagesensor) bezeichnet.

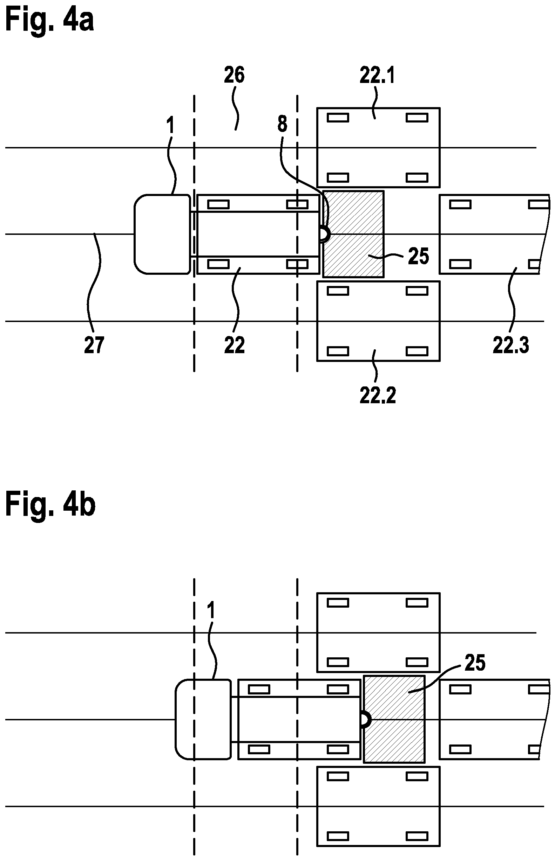

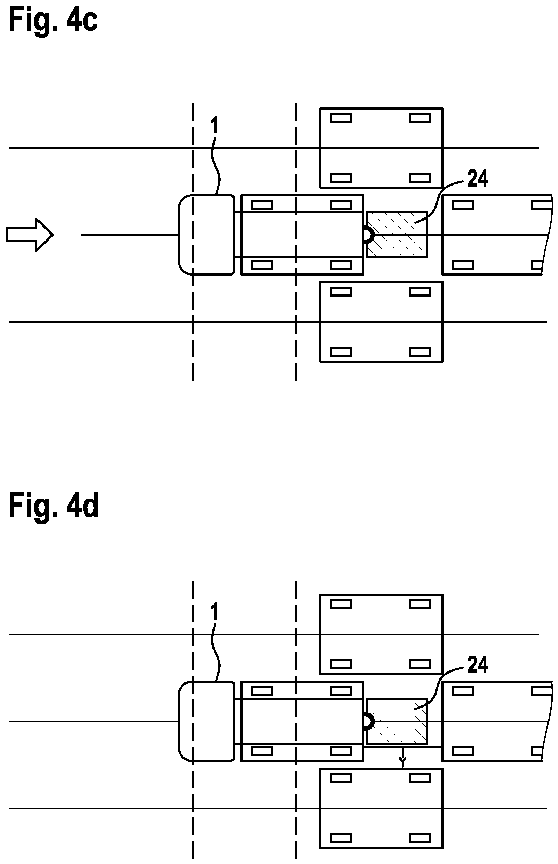

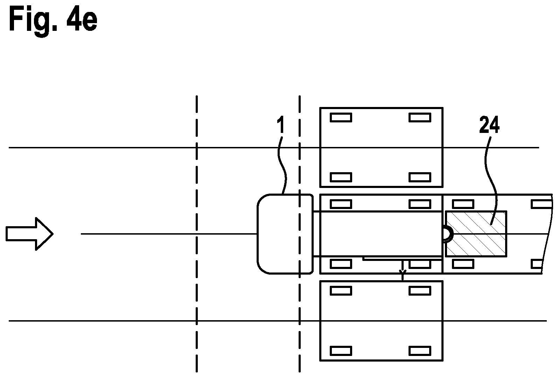

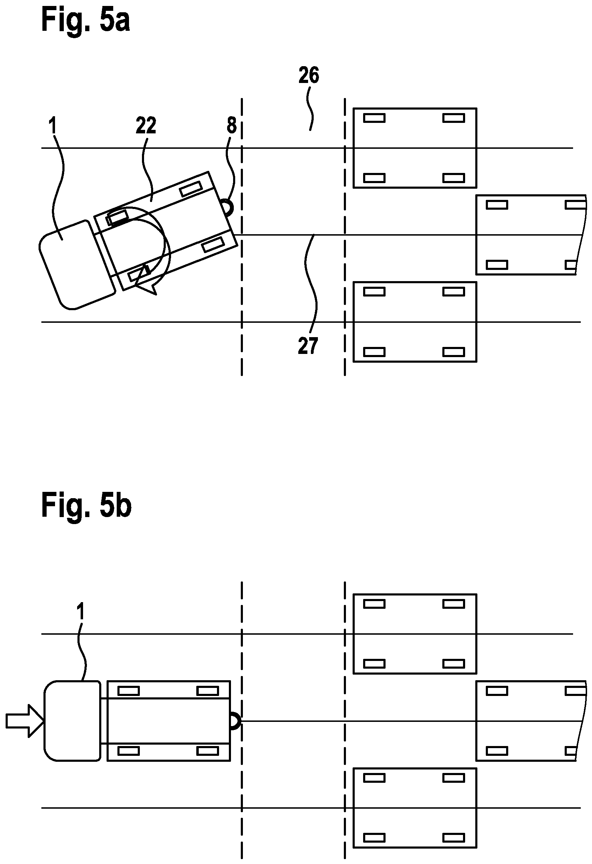

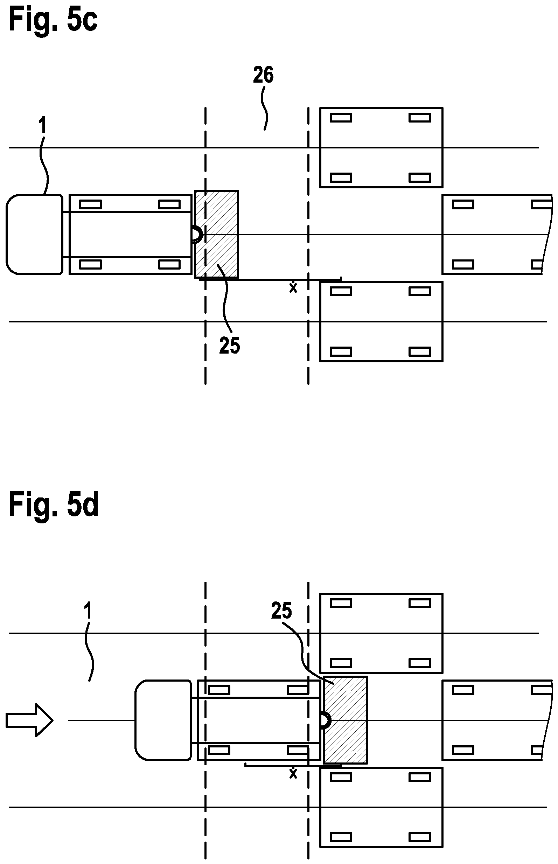

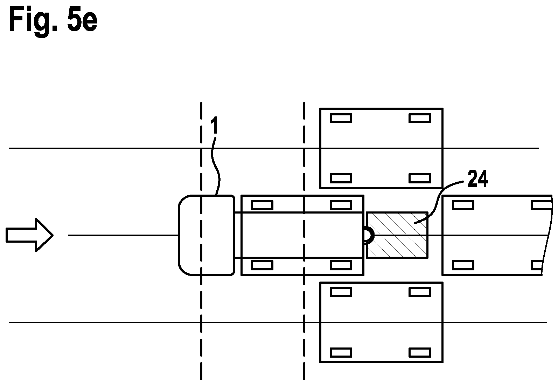

Die Fig. 4 und 5 stellen zwei Ausführungsformen des Betriebs des Flurförderzeugs 1 dar. Mit 24 ist ein schmales Schutzfeld und mit 25 ist ein breites Warnfeld des Laserscanners 8 bezeichnet.

Die Fig. 4a bis 4e veranschaulichen eine erste Ausführungsform des Betriebs des hier vorgestellten Flurförderzeugs. Die grundsätzliche Ablauflogik hierzu kann wie folgt zusammengefasst werden:
1. Die erste Steuereinheit 9 gibt die gewünschte Fahrtrichtung und die Geschwindigkeit an die zweite Steuereinheit 10.
2. Die zweite Steuereinheit 10 gibt die gewünschte Fahrtrichtung weiter an die dritte Steuereinheit 11, berechnet die Soll-Drehzahlen und gibt diese an die Motoren.
3. Sichere SIL2-Drehgeber übermitteln die Ist-Drehzahlen der Motoren an die dritte Steuereinheit 11.
4. Die dritte Steuereinheit 11 erkennt, wenn das Warnfeld 25 des hinteren Laserscanners 8 auslöst und schaltet diesen Laserscanner 8 auf ein schmaleres Schutzfeld 24 um.
5. Die dritte Steuereinheit 11 berechnet aus den Ist-Drehzahlen den Verfahrweg (sichere Radodometrie) und setzt über die zweite Steuereinheit 10 die Geschwindigkeit auf v = 0 mm/s, wenn der vorgegebene Verfahrweg (Y) erreicht ist. (Die Soll-Geschwindigkeiten der dritten Steuereinheit 11 haben Vorrang vor den Wunsch-Geschwindigkeiten der ersten Steuereinheit 9).

Der Ablauf im Einzelnen:
Schritt 1:
   Nach Einfahren in den Supermarkt wird zusätzlich zum Schutzfeld 24 ein Warnfeld 25 hinzugeschaltet, durch das die Abladeposition bzw. der nächste im Supermarkt bereits befindliche Transportwagen 22 (Dolly) erkannt werden soll (Fig. 4a).
Schritt 2:
   Das Flurförderzeug 1 fährt solange rückwärts, bis das Warnfeld 25 auslöst. Danach wird auf ein schmaleres Schutzfeld 24 umgeschaltet. Dieses Schutzfeld 24 ermöglicht sowohl die Erkennung von eingeschlossenen Personen als auch das Platzieren des Transportwagens 22 an den bereits vorhandenen (stationären) Transportwagen 22.1, 22.2, 22.3, weil das Schutzfeld 24 im Normalfall unter diesen schaut (Fig. 4b, 4c).
Schritt 3:
   Das Flurförderzeug 1 fährt weiterhin rückwärts eine über sichere Radodometrie überwachte Strecke Y und setzt das Transportgut ab (Fig. 4d, 4e).

Nachdem ein Hindernis im Supermarkt über den rückwärtigen Laserscanner 8 (mittels Warnfeld 25) erkannt wurde, ermöglicht die Aktivierung eines schmaleren Schutzfeldes 24 die Erkennung einer eingeschlossenen Person. Das Flurförderzeug 1 hält berührungslos an und ein zusätzlicher Not-Halt-Taster wird nicht mehr benötigt. Im Normalfall (keine eingeschlossene Person) "schaut" das schmalere Schutzfeld 24 unter das Transportgut (Transportwagen 22), an das das geladene Transportgut platziert wird, wobei der Platz in der "Supermarktspur" optimal ausgenutzt wird.

Besondere Vorteile bestehen unter anderem in der Erhöhung des Personenschutzes beim Abladen eines Transportguts in einem Gefahrenbereich, Wegfall eines zusätzlichen Not-Halt-Tasters und Verminderung des Platzbedarfs.

Die Fig. 5a bis 5e veranschaulichen eine zweite Ausführungsform des Betriebs des hier vorgestellten Flurförderzeugs. Die grundsätzliche Ablauflogik hierzu kann wie folgt zusammengefasst werden:
1. Die erste Steuereinheit 9 gibt die gewünschte Fahrtrichtung und die Geschwindigkeit an die zweite Steuereinheit 10.
2. Die zweite Steuereinheit 10 gibt die gewünschte Fahrtrichtung weiter an die dritte Steuereinheit 11, berechnet die Soll-Drehzahlen und gibt diese an die Motoren.
3. Sichere SIL2-Drehgeber übermitteln die Ist-Drehzahlen der Motoren an die dritte Steuereinheit 11.
4. Die dritte Steuereinheit 11 berechnet aus den Ist-Drehzahlen den Verfahrweg (sichere Radodometrie), schaltet in Abhängigkeit der gewünschten Fahrtrichtung das notwendige Laserscannerfeld und behält dieses für einen vorgegebenen Verfahrweg (X) zwingend bei.

Der Ablauf im Einzelnen:
Schritt 1:
   Die Rückwärtsfahrt beginnt, nachdem das Flurförderzeug 1 auf die Mittelspur 27 eingedreht hat (Fig. 5a, 5b).
Schritt 2:
   Das Schutzfeld 24 des hinteren Laserscanners 8 wird aktiviert und das Flurförderzeug fährt eine Strecke X Zentimeter rückwärts. Die X Zentimeter werden über sichere Radodometrie überwacht und damit sichergestellt, dass das Flurförderzeug sicher in den Supermarkt (Gefahrenbereich) eingefahren ist (Fig. 5c, 5d).
   Durch sicher überwachte Radodometrie wird sichergestellt, dass die Umschaltung auf ein schmales Schutzfeld 24 erst im Gefahrenbereich erfolgt. D. h., das zur sicheren Überquerung des Fußgängerwegs 26 notwendige Laserscannerfeld wird vor Beginn der Rückwärtsfahrt ausgewählt und zwingend für einen vorgegebenen Verfahrweg beibehalten.
Schritt 3:
   Das Flurförderzeug 1 fährt weiterhin rückwärts und setzt die Last 2 (Transportgut) ab. (Fig. 5e).

Mit Vorteil wird ein sicheres Überfahren von Fußgängerwegen 26 beim Einfahren in einen Gefahrenbereich erreicht. Dabei wird das Abschalten des Laserscanners 8 bzw. ein zu frühes Umschalten auf das schmale Schutzfeld 24 mit PLd sicher verhindert.

Das hier vorgestellte fahrerlose, autonom agierende Flurförderzeug 1 (AGV) findet bevorzugt Anwendung zum Beispiel in Fabriken, Lagerhallen, Supermärkten oder Krankenhäusern. Aufgrund von Sensoren, zum Beispiel Laserscanner, induktive Näherungssensoren, Ultraschallsensoren und/oder 3D-Kameras, werden Kollisionen (insbesondere mit einer Person und/oder einem Gegenstand) und/oder Orientierungslosigkeit vermieden. Transportiert werden beispielsweise Paletten, Kisten, Regale, Einzelteile oder Kleinladungsträger (KLTs) mit oder ohne Transportwagen (Dolly).

### Bezugszeichenliste

- 1: Flurförderzeug
- 1.1: Ladebereich
- 2: Last
- 3: Steuerungssystem
- 4: Auswerteeinheit
- 5: Detektoreinrichtung
- 6: Lastsensor
- 7: Sensorsystem
- 8: Laserscanner
- 8.1: Lasersichtfeld
- 9: erste Steuereinheit
- 10: zweite Steuereinheit
- 11: dritte Steuereinheit
- 12: erster Motor
- 13: zweiter Motor
- 14: Hub- und Absenkeinrichtung
- 15: erster Drehgeber
- 16: zweiter Drehgeber
- 17: datenleitende Verbindung
- 18: Bremssystem
- 19: Speicherelement
- 20.1, 20.2, 20.3: Räder des Flurförderzeugs
- 21: Ladegut
- 22: Transportwagen
- 22.1, 22.2, 22.3: Stationäre Transportwagen
- 23.1, 23.2: Räder des Transportwagens
- 24: Schutzfeld
- 25: Warnfeld
- 26: Fußgängerweg
- 27: Mittelspur
- A, B: Bewegungsrichtungen
- X, Y: Strecken

## Patentansprüche

1. Flurförderzeug (1), eingerichtet für den fahrerlosen, autonom agierenden Betrieb für eine zu transportierende Last (2), umfassend zumindest:
- ein Steuerungssystem (3), das das Flurförderzeug (1) steuert und lenkt,
- eine Auswerteeinheit (4), die ein Signal zum Anhalten des Flurförderzeugs (1) erzeugt,
wobei eine Detektoreinrichtung (5) zur Erkennung von im Fahrweg befindlichen Personen und/oder Objekten an das Steuerungssystem (3) angeschlossen ist, wobei das Steuerungssystem (3) eingerichtet ist, ein Schutz- (24) und/oder Warnfeld (25) der Detektoreinrichtung (5) zu prüfen, **dadurch gekennzeichnet, dass** das Schutz- (24) und/oder Warnfeld (25) in Abhängigkeit von der Position des Flurförderzeugs (1) und/oder detektierter Hindernisse im Fahrweg des Flurförderzeugs (1) zwischen einem breiten Warnfeld (25) und einem schmaleren Schutzfeld (24) automatisch umschaltbar ist, wobei selbstständig ein abweichendes vorgegebenes Schutz- (24) und/oder Warnfeld (25) der Detektoreinrichtung (5) vorgebbar oder aktivierbar ist, wenn das Steuerungssystem (3) ein konkretes Muster im aktuellen Schutz- (24) und/oder Warnfeld (25) erkennt.

2. Flurförderzeug (1) nach Patentanspruch 1, wobei das Steuerungssystem (3) eine Steuereinheit (9) für die gewünschte Fahrtrichtung und die Geschwindigkeit, eine Steuereinheit (10) für die Bewegung und eine Steuereinheit (11) für die Sicherheit des Flurförderzeugs (1) umfasst.

3. Flurförderzeug (1) nach Patentanspruch 1 oder 2, wobei die Detektoreinrichtung (5) einen Laserscanner (8) umfasst.

4. Flurförderzeug (1) nach Patentanspruch 3, wobei der Laserscanner (8) am Heckteil des Flurförderzeugs (1) angeordnet ist.

5. Flurförderzeug (1) nach einem der vorhergehenden Patentansprüche, wobei das Steuerungssystem (3) eine Auswerteeinheit (4) umfasst.

6. Flurförderzeug (1) nach einem der vorhergehenden Patentansprüche, wobei der Laserscanner (8) an die dritte Steuereinheit (11) angeschlossen ist.

7. Flurförderzeug (1) nach einem der vorhergehenden Patentansprüche, wobei die zweite Steuereinheit (10) und die dritte Steuereinheit (11) eingerichtet sind, anhand von vorgegebenen Schutz (24) - und Warnfeldern (25) des Laserscanners (8) die Umgebung auf Hindernisse zu prüfen.

8. Flurförderzeug (1) nach einem der vorhergehenden Patentansprüche, wobei mehrere Schutzfelder (24) im Laserscanner (8) vordefiniert sind.

9. Flurförderzeug (1) nach einem der vorhergehenden Patentansprüche, wobei die dritte Steuereinheit (11) eingerichtet ist, die Schutzfelder (24) zu aktivieren oder zu deaktivieren.

10. Flurförderzeug (1) nach einem der vorhergehenden Patentansprüche, wobei das Steuerungssystem (3) eingerichtet ist, den Fahrweg des Flurförderzeugs (1) durch Radodometrie zu überwachen.

## Claims

1. Industrial truck (1) configured for driverless, autonomously acting operation for a load (2) to be transported, comprising at least:
- a control system (3) which controls and steers the industrial truck (1),
- an evaluation unit (4) which generates a signal for stopping the industrial truck (1),
wherein a detector device (5) for detecting persons and/or objects on the route is connected to the control system (3), wherein the control system (3) is configured to test a protective (24) and/or warning field (25) of the detector device (5), **characterized in that** the protective (24) and/or warning field (25) can be automatically switched between a wide warning field (25) and a narrower protective field (24) depending on the position of the industrial truck (1) and/or detected obstacles on the route of the industrial truck (1), wherein a deviating predefined protective (24) and/or warning field (25) of the detector device (5) can be predefined or activated independently if the control system (3) detects a specific pattern in the current protective (24) and/or warning field (25).

2. Industrial truck (1) according to Patent Claim 1, wherein the control system (3) comprises a control unit (9) for the desired direction of travel and the speed, a control unit (10) for the movement and a control unit (11) for the safety of the industrial truck (1).

3. Industrial truck (1) according to Patent Claim 1 or 2, wherein the detector device (5) comprises a laser scanner (8).

4. Industrial truck (1) according to Patent Claim 3, wherein the laser scanner (8) is arranged on the rear part of the industrial truck (1).

5. Industrial truck (1) according to one of the preceding patent claims, wherein the control system (3) comprises an evaluation unit (4).

6. Industrial truck (1) according to one of the preceding patent claims, wherein the laser scanner (8) is connected to the third control unit (11).

7. Industrial truck (1) according to one of the preceding patent claims, wherein the second control unit (10) and the third control unit (11) are configured to check the environment for obstacles using predefined protective (24) and warning fields (25) of the laser scanner (8).

8. Industrial truck (1) according to one of the preceding patent claims, wherein a plurality of protective fields (24) are predefined in the laser scanner (8).

9. Industrial truck (1) according to one of the preceding patent claims, wherein the third control unit (11) is configured to activate or deactivate the protective fields (24).

10. Industrial truck (1) according to one of the preceding patent claims, wherein the control system (3) is configured to monitor the route of the industrial truck (1) by means of wheel odometry.

## Revendications

1. Chariot de manutention (1), conçu pour un fonctionnement sans conducteur, à action autonome, pour une charge (2) à transporter, comprenant au moins :
- un système de commande (3) qui commande et dirige le chariot de manutention (1),
- une unité d'évaluation (4) qui génère un signal pour arrêter le chariot de manutention (1),
un dispositif de détection (5) destiné à la reconnaissance de personnes et/ou d'objets qui se trouvent dans le trajet étant raccordé au système de commande (3), le système de commande (3) étant conçu pour contrôler un champ de protection (24) et/ou d'avertissement (25) du dispositif de détection (5), **caractérisé en ce que** le champ de protection (24) et/ou d'avertissement (25) peut être permuté automatiquement entre un champ d'avertissement (25) large et un champ de protection (24) plus étroit en fonction de la position du chariot de manutention (1) et/ou d'obstacles détectés dans le trajet du chariot de manutention (1), un champ de protection (24) et/ou d'avertissement (25) prédéfini différent du dispositif de détection (5) pouvant être prédéfini ou activé de manière autonome lorsque le système de commande (3) reconnaît un modèle concret dans le champ de protection (24) et/ou d'avertissement (25) actuel.

2. Chariot de manutention (1) selon la revendication 1, le système de commande (3) comprenant une unité de commande (9) pour le sens de déplacement et la vitesse souhaités, une unité de commande (10) pour le déplacement et une unité de commande (11) pour la sécurité du chariot de manutention (1).

3. Chariot de manutention (1) selon la revendication 1 ou 2, le dispositif de détection (5) comprenant un dispositif de balayage à laser (8).

4. Chariot de manutention (1) selon la revendication 3, le dispositif de balayage à laser (8) étant disposé au niveau de la partie arrière du chariot de manutention (1).

5. Chariot de manutention (1) selon l'une des revendications précédentes, le système de commande (3) comprenant une unité d'évaluation (4).

6. Chariot de manutention (1) selon l'une des revendications précédentes, le dispositif de balayage à laser (8) étant raccordé à la troisième unité de commande (11).

7. Chariot de manutention (1) selon l'une des revendications précédentes, la deuxième unité de commande (10) et la troisième unité de commande (11) étant conçues pour vérifier la présence d'obstacles dans l'environnement à l'aide de champs de protection (24) et d'avertissement (25) prédéterminés du dispositif de balayage à laser (8).

8. Chariot de manutention (1) selon l'une des revendications précédentes, plusieurs champs de protection (24) étant prédéfinis dans le dispositif de balayage à laser (8).

9. Chariot de manutention (1) selon l'une des revendications précédentes, la troisième unité de commande (11) étant conçue pour activer ou désactiver les champs de protection (24).

10. Chariot de manutention (1) selon l'une des revendications précédentes, le système de commande (3) étant conçu pour surveiller la trajectoire du chariot de manutention (1) par odométrie de roue.
